Europäisches Patentamt

European Patent Office

Office européen des brevets

(11) Veröffentlichungsnummer: **0 290 754 B1**

(12) **EUROPÄISCHE PATENTSCHRIFT**

(45) Veröffentlichungstag der Patentschrift: **16.10.91**

(51) Int. Cl.5: **F24D 3/14**

(21) Anmeldenummer: **88104421.8**

(22) Anmeldetag: **19.03.88**

(54) **Industriefussboden mit einer Fussbodenheizung.**

(30) Priorität: **25.04.87 DE 3713977**
**17.08.87 DE 3727300**

(43) Veröffentlichungstag der Anmeldung:
**17.11.88 Patentblatt 88/46**

(45) Bekanntmachung des Hinweises auf die
Patenterteilung:
**16.10.91 Patentblatt 91/42**

(84) Benannte Vertragsstaaten:
**AT BE CH DE ES FR GB GR IT LI LU NL SE**

(56) Entgegenhaltungen:
**EP-A- 0 209 618**
**BE-A- 527 128**
**CA-A- 1 150 722**

(73) Patentinhaber: **Hewing GmbH**
**Waldstrasse 3**
**W-4434 Ochtrup(DE)**

(72) Erfinder: **Hagemann, Franz-Josef**
**Eichendorffallee 8**
**W-4434 Ochtrup 2(DE)**
Erfinder: **Hewing, Bernd**
**Gronauer Strasse 14**
**W-4434 Ochtrup(DE)**
Erfinder: **Hakenbeck, Detlef**
**Seminarstrasse 34**
**W-4430 Steinfurt(DE)**

(74) Vertreter: **Hoffmeister, Helmut, Dr. Dipl.-Phys.**
**Patentanwalt Goldstrasse 36**
**W-4400 Münster(DE)**

## Beschreibung

Die Erfindung betrifft einen Industriefußboden mit einer Fußbodenheizung, bestehend aus wenigstens einer obenliegenden, bewehrten Belastungsschicht, die im wesentlichen aus hochfestem Beton besteht und frei von Heizrohren ist, und aus einer unter der Belastungsschicht liegenden Rohrführungsschicht, die aus einer relativ zur Betonschicht wesentlich weniger festen Schicht, beispielsweise Sand, besteht, in der die Heizrohre fixiert angeordnet sind.

Industriefußböden sind für hohe Belastungen ausgelegt. Es wird in diesem Zusammenhang auf DIN 1055 verwiesen, in der erwähnt ist, daß derartige Böden eine Belastung von $10^4$ kN/m² aushalten müssen. Auf die Fußböden werden Maschinen aufgestellt, die mit Fundamenten tief im Fußboden verankert sein müssen. Ein weiteres Erfordernis ist, daß Standorte der Maschinen wechseln, so daß Fundamente herausgebrochen werden und die Bruchstellen wieder hochfest verschlossen werden können, ohne daß die zugehörige Fußbodenheizung repariert werden muß. Darüber hinaus müssen Dehnfugen vorgesehen werden, die ebenfalls bei Fußböden, die mit einer Fußbodenheizung versehen sind, nicht leicht unterzubringen sind. Schließlich ist zu berücksichtigen, daß dort, wo Industriefußböden verlegt werden, im allgemeinen große Mengen an sogenannter Abfallwärme anfallen, die für eine NiedertemperaturFußbodenheizung verwertet werden kann. Die Wärmeabgabe derartiger Fußböden ist deshalb relativ gering. Man rechnet mit Werten von 30 - 40 W/m², wobei eine Vorlauftemperatur von 25 - 30 ° C im allgemeinen ausreichend ist. Unter derartigen "Industriefußböden" werden demnach auch im Freien liegende Fahrbahnen oder aber auch Startbahnen verstanden, bei denen eine Vereisung zuverlässig verhindert werden soll.

Für derartige Industriefußböden sind Aufbauten bekannt (vgl. EP-OS 209 618), bei denen oberhalb einer Rohrführungsschicht eine "monolithische" Betonschicht beliebiger Stärke angeordnet ist. Mit dieser Betonschicht verbunden ist eine Estrichschicht, in der Bewehrungsgitter liegen, an denen die Heizungsrohre befestigt sind. Bei den Heizungsrohren handelt es sich im allgemeinen um Kunststoffrohre, die eine gewisse Wärmebewegung ausführen können. Die Befestigung an den Bewehrungsgittern erfolgt im allgemeinen durch bekannte Clipse oder verbiegbare Befestigungsvorrichtungen. Nachteil bei dem Stand der Technik ist, daß eine sehr feste Fußbodenschicht erstellt wird, die bei Zerstören oder Einarbeiten in die obenliegende Belastungsschicht sehr stark beansprucht wird, wobei die Gefahr besteht, daß die Rohre selbst beschädigt werden können. Der bekannte Industriefußboden ist deshalb nur sehr vorsichtig zu behandeln. Der flexible Aufbau und Abbau von schweren Maschinen mit entsprechenden verankerten Fundamenten ist nicht zu realisieren.

Aus der CA-A 1 150 722 ist ein Herstellungsverfahren für einen Industriefußboden mit eingebettetem Heizungsrohrsystem bekannt, das folgende Verfahrensschritte umfaßt:
Zunächst werden transportable Bauelemente wie Platten, auf denen eine Heizungsrohranordnung in gewünschter Konfiguration in bekannter Weise, z. B. mittels Clipsen, befestigt ist, die vorzugsweise außerhalb der Baustelle z.B. in Fabriken vorgefertigt worden sind, auf der Baustelle ausgelegt; die verlegten Platten werden mit einer Schicht aus wärmeleitfähigem Material, wie z.B. Sand, abgedeckt. Danach wird eine Betonschicht in der gewünschten Dicke auf diese Schicht aufgebracht.

Die Sandschicht hat hier die Aufgabe, ein Verschieben der Rohranordnung beim Aufbringen der Betonschicht zu verhindern. Eine Montage- und Umrüsterleichterung im vorgenannten Sinne stellt die Sandschicht nicht dar.

Demgegenüber stellt sich die Erfindung zur Aufgabe, einen Industriefußboden anzugeben, der für eine Niedertemperatur-Fußbodenheizunggeeignet ist und der nach der Verlegung in einfacher Weise für Maschinenaufstellungen und -umstellungen geeignet ist, wobei Fundamentierung und Verankerungen in der Belastungsschicht diese zwar beschädigen, jedoch derart, daß eine einfache Reparatur und Indstandsetzung möglich ist. Dabei soll die Festigkeitsanforderung an die Belastungsschicht beliebig hochgeschraubt werden können, ohne daß Rücksicht auf die für die Fußbodenheizung erforderlichen Rohre genommen werden muß. Darüberhinaus soll ein derartige Industriefußboden kostengünstig herstellbar sein.

Diese Aufgabe wird bei einem Industriefußboden der eingangs genannten Art dadurch gelöst, daß die Rohrführungsschicht (mit den Rohren) auf einer mineralischen Bettung, die hauptsächlich der Wärmedämmung dient, und unterhalb der eine wasserdichte Folie angeordnet ist, aufliegt.

Als Material für die mineralische Bettung, auf der die ein Sandbett bildende Rohrführungsschicht aufliegt und die nach Verdichtung eine hochbelastbare Dämmschicht bildet, eignet sich beispielsweise gebrochene Hochofenschlacke, Hüttenbims, Lavabims, gebrochener Blähton oder ähnliche, mineralische Stoffe, die preiswert sind und hoch verdichtet werden können.

Unterhalb der mineralischen Bettung und gegebenenfalls zusätzlich zwischen Belastungsschicht und Sandbett ist eine wasserdichte Folie angeordnet. Hierdurch ergeben sich Feuchtigkeitssperren, wie dies an sich für Bodenaufbauten bekannt ist. Die Rohrführungsschicht kann auch aus Magerbeton bestehen.

Die Heizungsrohre werden sinusförmig verlegt und in bekannter Weise mit Clipsen oder ähnlichen Vorrichtungen auf einer Stahl-Trägermatte derart fixiert, daß sie entsprechend den Erfordernissen der Warmeausdehnung einen ausreichenden Dehnraum behalten.

Vorzugsweise ist die Rohrführungsschicht eingefärbt.

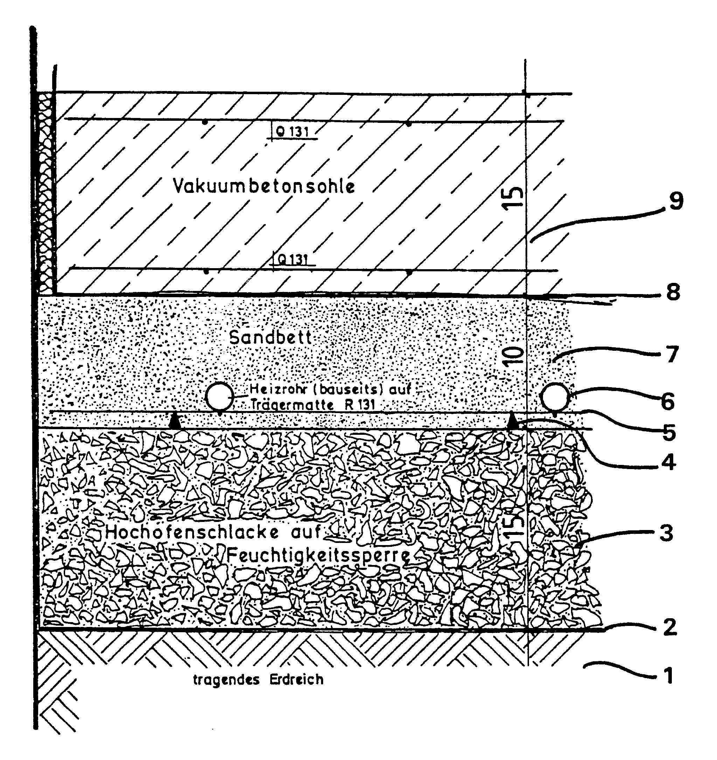

Ein Ausführungsbeispiel eines Industriefußboden gemäß Erfindung ist in der Zeichnung dargestellt. Die Zeichnung zeigt im Schnitt einen Aufbau durch einen hochbelastbaren Industriefußboden.

Der in der Zeichnung dargestellte Industriefußboden gemäß Erfindung betrifft ein Ausführungsbeispiel, bei dem auf einem tragenden Erdreich 1 eine Polyethylen-Folie 2 einer Stärke von etwa 1 mm aufgelegt ist, die eine Feuchtigkeitssperre ergibt. Auf das tragende Erdreich mit der daraufliegenden Folie 2 wird gebrochene Hochofenschlakke, wie sie für den Wegebau verwendet wird, aufgeschüttet und mit Hilfe von Walzen verdichtet. Damit ergibt sich eine verdichtete, mineralische Bettung 3, die hoch belastbar ist. Direkt auf die mineralische Bettung 3 wird über Abstandshalter 4 eine Trägermatte 4 aus Stahl aufgelegt, beispielsweise mit einer 10 x 10 - Anordnung von 0,5 cm Baustahl. Auf der Trägermatte 5 wird über an sich bekannte Clipse eine Anordnung in Mäander- oder Sinusform von flexiblen Kunststoff-Heizrohren verlegt, wobei Rohrdichte, Rohrdurchmesser und ähnliche Daten sich aus dem Wärmebedarf und der beabsichtigten Vorlauftemperatur ergeben. Die Heizrohre 6 werden dann in ein etwa 10 cm hohes Sandbett aus quarzitischem Feinsand mit einer Körnung von 0,2 bis 0,5 mm eingebettet. Das sich ergebende Sandbett 7 wird mit Hilfe von mechanischen Rüttlern verdichtet, gegebenenfalls, etwas befeuchtet, so daß es fest auf die mineralische Bettung 3 aufgedrückt ist und mit dieser eine belastbare Einheit wird. Anschließend wird eine weitere wasserdichte Folie 8, beispielsweise in einer Stärke von 0,8 mm, aufgelegt, wobei auch diese Folie aus PE bestehen kann. Auf die Folie wird dann eine hochfeste Belastungsschicht 9 aufgebracht, die im vorliegenden Ausführungsbeispiel aus sogenanntem Vakuumbeton besteht. Die Belastungsschicht 9 kann nach oben noch mit einem Anstrich oder einem bekannten Fußbodenbelag überdeckt sein.

Im vorliegenden Ausführungsbeispiel sind folgende Abmessungen gewählt worden:
mineralische Bettung 3: 15 cm Dicke
Sandbett7: 10 cm Dicke
Belastungsschicht 9: 15 cm Dicke.

Durch den vorgenannten Aufbau, der von der Dicke und von der Materialauswahl in den einzelnen Schichten entsprechend den Erfordernissen variiert werden kann, ergibt sich ein Industriefußboden, in dem sich die Heizrohre 6 entsprechend ihrer Verlegung gut ausdehnen können. Die Belastungsschicht ist frei von Heizungsrohren und mit der Rohrführungsschicht, d. h. dem Sandbett 7, nicht so fest verbunden, daß starke mechanische Beanspruchungen der Belastungsschicht sich auf das Sandbett übertragen. Dehnungsfugen können in einfacher Weise eingebracht werden, ohne daß Heizrohre freigelegt werden müssen. Die Belastungsschicht 9 kann überdies in jeder beliebigen Stärke und mit jeder beliebigen Festigkeit hergestellt werden.

Darüber hinaus ist der Industriefußboden preiswert herzustellen, da auf kostspieliges Dämmaterial verzichtet werden kann. Es zeigt sich, daß bei Verwendung von Niedertemperatur-Heizungen die in das Erdreich abfließende Wärme äußerst gering ist. Aufgrund der Verteilung der Wärmeleitungskoeffizienten in dem vorgenannten Industriefußboden fließt der weitaus größere Teil an die Oberfläche ab.

## Patentansprüche

1. Industriefußboden mit einer Fußbodenheizung, bestehend aus wenigstens einer obenliegenden, bewehrten Belastungsschicht, die im wesentlichen aus hochfestem Beton besteht und frei von Heizrohren ist, und aus einer unter der Belastungsschicht liegenden Rohrführungsschicht, die aus einer relativ zur Betonschicht wesentlich weniger festen Schicht, beispielsweise Sand, besteht, in der die Heizrohre fixiert angeordnet sind,
dadurch gekennzeichnet, daß die Rohrführungsschicht (7) auf einer mineralischen Bettung (3), die hauptsächlich der Wärmedämmung dient, und unterhalb der eine wasserdichte Folie (2) angeordnet ist, aufliegt.

2. Industriefußboden nach Anspruch 1, dadurch gekennzeichnet, daß die Bettung (3) aus gebrochener Hochofenschlacke oder aus Hüttenbims besteht.

3. Industriefußboden nach Anspruch 1, dadurch gekennzeichnet, daß die Rohrführungsschicht aus Magerbeton besteht.

4. Industriefußboden nach Anspruch 1 - 3, dadurch gekennzeichnet - daß die Rohrführungsschicht eingefärbt ist.

## Claims

1. An industrial floor with a floor heating system, consisting of at least one upper reinforced load layer which consists substantially of high-strength concrete and is free of any heating pipes, and of a pipe layer situated beneath, the load layer and consisting of a layer which is much less solid than the concrete layer, e.g. sand, in which, the heating pipes are fixed, characterised in that the pipe layer (7) is disposed on a mineral bedding (3) which serves mainly for heat insulation and beneath which a water-proof sheet (2) is disposed.

2. An industrial floor according to claim 1, characterised in that the bedding (3) consists of broken blast-furnace slag or foundry pumice.

3. An industrial floor according to claim 1, characterised in that the pipe layer consists of lean concrete.

4. An industrial floor according to claims 1 to 3, characterised in that the pipe layer is dyed.

**Revendications**

1. Sol industriel avec chauffage par le sol, composé d'au moins une couche de charge supérieure armée qui est constituée pour l'essentiel de béton à haute résistance et ne comporte pas de tuyaux de chauffage, et d'une couche de guidage des tuyaux qui se trouve sous la couche de charge, est constituée par une couche considérablement moins résistante que la couche de béton, par exemple de sable, et dans laquelle les tuyaux de, chauffage sont disposés de manière fixe, caractérisé en ce que la couche de guidage des tuyaux (7) est appliquée sur un lit minéral (3) qui sert principalement à l'isolation thermique et sous lequel est disposée une feuille imperméable à l'eau (2).

2. Sol industriel selon la revendication 1, caractérisé en ce que le lit (3) est composé de laitier de haut fourneau broyé ou de thermosite.

3. Sol industriel selon la revendication 1, caractérisé en ce que la couche de guidage des tuyaux est constituée de béton maigre.

4. Sol industriel selon les revendications 1 à 3, caractérisé en ce que la couche de guidage des tuyaux est colorée.

Q 131

Vakuumbetonsohle

Q 131

15

Sandbett

10

Heizrohr (bauseits) auf
Trägermatte R 131

Hochofenschlacke auf
Feuchtigkeitssperre

15

tragendes Erdreich